# EUROPÄISCHE PATENTANMELDUNG

(11) **EP 1 813 886 A1**
(43) Veröffentlichungstag der Anmeldung: **01.08.2007**
(21) Anmeldenummer: 06001643.3
(22) Anmeldetag: 26.01.2006
(51) Int. Cl.: F24J 3/08

(54) **Verfahren und Vorrichtung zur Nutzung thermischer Energie**

(71) Anmelder: Arcadis Consult GmbH, 09599 Freiberg/Sachsen (DE)
(72) Erfinder: Neumann, Michael Dr, 09599 Freiberg/Sachsen (DE); Finkenstein, Florian, 04509 Krostitz (DE)
(74) Vertreter: Rothkopf, Ferdinand

(57) **Zusammenfassung**

Die Erfindung betrifft ein Verfahren und eine Vorrichtung zur Nutzung thermischer Energie. Ein Medienleiter (9, 29) wird in einem für andere Zwecke als der geothermischen Energiegewinnung genutzten Hohlraum (1, 21) im Erdreich (15, 25) angeordnet. Durch den Medienleiter (9, 29) wird ein Fluid geleitet, das in der Lage ist, Wärmeenergie aus dem den Hohlraum (1, 21) umgebenden Erdreich (15, 25) und/oder einem den Hohlraum (1, 21) ausfüllenden Fluid aufzunehmen.

## Beschreibung

### Hintergrund der Erfindung

Die Erfindung betrifft ein Verfahren und eine Vorrichtung zur Nutzung thermischer Energie, insbesondere diffuser thermischer und/oder geothermischer Energie. Die thermische Energie wird insbesondere zur Beheizung von Gebäuden und dergleichen genutzt.

Herkömmlich werden zur Gewinnung geothermischer Energie Tiefbohrungen in dem Erdreich vorgenommen. Die Bohrungen werden mittels Bohrtürmen oder Bohrmastanlagen durchgeführt. Bei den Bohreinrichtungen ist ein Bohrkopf mit einem auf dem Erdreich angeordneten Drehantrieb durch einen Bohrstrang verbunden. Der Bohrstrang umfasst eine Vielzahl von Stangen, Zentriervorrichtungen, Motoren usw., die je nach Bohrlochtiefe ergänzt werden. Der Bohrstrang hängt an einem System aus Haken, einem Flaschenzug, einer Seilrolle und einer Seilwinde, das an einem Bohrmast angeordnet ist. Derartige Bohrungen sind entsprechend den erforderlichen Gerätschaften und dem Arbeitsaufwand vergleichsweise kostspielig.

Weiterhin können derartige Tiefbohrungen aufgrund der Konstruktionsweise der Bohranlagen nur nahezu senkrecht in das Erdreich ausgeführt werden. Wenn dann aber nach einer gewissen Bohrtiefe festgestellt wird, dass die tiefer liegende Bohrschicht nicht durchbohrt werden kann, muss die Bohrung abgebrochen und gegebenenfalls eine vollständig neue Bohrung angefertigt werden.

Weiterhin ist eine Tiefbohrung mit Lärm verbunden und erfordert viel Platz für die erforderlichen Gerätschaften. Ferner müssen meistens mindestens zwei Bohrungen durchgeführt werden, wobei eine Bohrung zur Entnahme des erhitzten Dampfes und die weitere Bohrung zur Rückführung des Kondensats dient. Eine Tiefbohrung kann daher nur schwer in der Nähe von bewohnten Gebieten ausgeführt werden, zu denen die geothermische Energie bevorzugt hingeleitet wird.

### Zugrundeliegende Aufgabe

Es ist eine Aufgabe der vorliegenden Erfindung, ein Verfahren und eine Vorrichtung zur Nutzung thermischer Energie anzugeben, welche es erlauben, die Kosten für die Gewinnung von Energie aus dem Erdreich zu reduzieren.

### Erfindungsgemäße Lösung

Die Aufgabe wird erfindungsgemäß durch Bereitstellung eines Verfahrens und einer Vorrichtung gelöst, bei denen in einem für andere Zwecke als der geothermischen Energiegewinnung bestehenden bzw. genutzten oder herzustellenden Hohlraum im Erdreich mindestens ein rohrförmiger Medienleiter angeordnet wird, und ein Fluid durch den Medienleiter geleitet wird, das angepasst ist, Wärmeenergie aus dem den Hohlraum umgebenden Erdreich und/oder einem den Hohlraum ausfüllenden Fluid aufzunehmen.

Erfindungsgemäß wird Wärmeenergie durch einen eigentlich für andere Zwecke herzustellenden oder hergestellten Hohlraum hindurch dem Erdreich und/oder einem den Hohlraum ausfüllenden Fluid, beispielsweise Luft, entzogen und die entzogene Wärmeenergie mittels eines strömenden Fluids an einen gewünschten Ort transportiert. Kosten für eine separate Bereitstellung einer Bohrung oder dergleichen entfallen daher gemäß der Erfindung.

Vorteilhaft ist der Hohlraum ein künstlicher Hohlraum. Künstliche Hohlräume sind im Allgemeinen derart ausgestaltet, dass sie Begrenzungsflächen aufweisen, die vergleichsweise glatt sind. Dadurch lässt sich ein rohrförmiger Medienleiter zum Ableiten von Wärmeenergie aus dem umgebenden Erdreich gut an den Begrenzungsflächen eines derartigen Hohlraums anbringen. Zudem weisen künstliche Hohlräume im Allgemeinen eine Röhrenstruktur auf, an die der rohrförmige Medienleiter leicht angepasst werden kann. Weiterhin sind derartige künstliche Hohlräume bereits unterhalb von bewohnten Gebieten vorhanden und können daher genutzt werden, ohne dass Bohrungen oder andere Grabungen und dergleichen vorgenommen werden müssen.

In einer bevorzugten Ausführungsform der Erfindung wird der rohrförmige Medienleiter daher gezielt Wärme leitend an den Begrenzungsflächen des Hohlraums angeordnet. Die Begrenzungsflächen sind die Decke, die Seitenwände und der Boden des Hohlraums. Die Wärmeenergie wird in einem Hohlraum im Erdreich nur geringfügig in der Luft und hauptsächlich in den Decken, Wänden und Böden gespeichert. Daher ist es vorteilhaft, den Hohlräumen die in den Begrenzungsflächen gespeicherte Wärmeenergie zu entziehen.

Vorteilhafterweise wird als Hohlraum ein Bahntunnel genutzt. Ein Bahntunnel beinhaltet mit den darin verkehrenden Zügen Wärmequellen, welche das den Bahntunnel umgebende Erdreich erwärmen. Bahntunnel können Eisenbahn-, U-Bahn-, S-Bahn- oder Straßenbahntunnel sein. Alternativ oder zusätzlich kann der erfindungsgemäß zur geothermischen Energiegewinnung genutzte Hohlraum ein Straßentunnel sein. Ein Straßentunnel wird durch hindurch fahrende Kraftfahrzeuge erwärmt. Ferner kann als Hohlraum ein bereits bestehender oder neu herzustellender Abwasserkanal mit Abwasser als Fluid genutzt werden. Abwasserkanäle führen die in dem Abwasser gespeicherte Wärmeenergie mit sich. Weiterhin wird die in dem Abwasser gespeicherte Wärmeenergie vorteilhaft an die Begrenzungsflächen des Abwasserkanals abgegeben. Alternativ oder zusätzlich ist der Hohlraum bevorzugt ein Bergbaustollen. In Bergbaustollen wird von dort betätigten Maschinen Wärmeenergie erzeugt und im umgebenden Erdreich gespeichert.

Die vorstehenden Hohlräume weisen wie bereits erwähnt bevorzugt Begrenzungsflächen mit einer glatten Oberfläche auf. Die Oberflächenkontur des rohrförmigen Medienleiters ist vorteilhaft an die Oberflächenkontur mindestens einer Begrenzungsfläche angepasst, sodass sie parallel zueinander liegen und einander großflächig berühren. Dadurch wird eine große Wärmeübertragungsfläche genutzt.

Besonders bevorzugt ist das Rohr ein Flachrohr, d.h. seine Breite ist im Verhältnis zur Höhe groß. Das Flachrohr absorbiert die Wärmeenergie einer Begrenzungsfläche des Hohlraums über seine an der Fläche anliegende Breitseite und seine Länge. Daher ist es vorteilhaft, die Höhe des Rohrs gering zu halten. Zudem ragt ein derartiges Rohr nicht weit ins Innere des Hohlraums und stellt somit keine Behinderung für die weitere Nutzung des Hohlraums dar.

Um eine gute Wärmeübertragung zu gewährleisten, umfasst der rohrförmige Medienleiter bevorzugt ein Rohr aus Kunststoff. Kunststoffe sind im Allgemeinen gute Wärmeleiter, sodass die Wärmeenergie aus dem Erdreich durch die Wandung des Kunststoffrohrs hindurch zu dem Fluid geleitet werden kann. Insbesondere thermoplastische Kunststoffe und Duroplaste sind geeignet, als Wärmeleiter zu dienen. Vorzugsweise besteht das Rohr aus Polyethylen.

Alternativ oder zusätzlich umfasst der rohrförmige Medienleiter das Material Stahl, das besonders belastbar und gut geeignet ist, Wärmeenergie zu leiten. Auch Aluminium ist als guter Wärmeleiter hervorragend für den Medienleiter geeignet. Bevorzugt umfasst der Medienleiter ein Mehrschichtverbundrohr. Dieses ist vorteilhaft mit 3 oder 5 Schichten gestaltet. Der Aufbau der 3-schichtigen Verbundrohre von Innen nach Außen ist folgender: vernetztes Polyethylen, Aluminium, Polyethylen hoher Dichte. Zwischen Aluminium und Polyethylen kann vorteilhaft noch jeweils eine Haftvermittlerschicht angeordnet sein. Vorteile der Verbundrohre sind eine leichte Biegsamkeit im Gegensatz zu Kunststoffrohren bei gleichzeitiger Formstabilität, ihr geringes Gewicht und die kostengünstige Herstellung. Zudem sind die Mehrschichtverbundrohre sauerstoffundurchlässig, somit kann eine Korrosion von Vorrichtungen, wie beispielsweise Heizkörpern oder Pumpen verhindert werden, zu denen das in dem Medienleiter strömende Fluid hingeleitet wird.

In einer bevorzugten Ausführungsform der Erfindung ist an dem Medienleiter teilweise eine Schicht aus einem Isoliermaterial angeordnet. Vorteilhaft wird das Isoliermaterial außenwandig an dem Medienleiter angeordnet. Das Isoliermaterial kann ferner zugleich als ein ästhetisches Element eingesetzt werden. In einer weiteren vorteilhaften Ausführungsform wird das Isoliermaterial inwandig in dem Medienleiter angeordnet. Bevorzugt wird das Isoliermaterial an einer Fläche des Medienleiters angeordnet, die nicht in Kontakt zu einer Begrenzungsfläche des Hohlraums steht. Dadurch wird ein Wärmeaustausch mit einer Umgebung des Medienleiters, die keine Begrenzungsfläche ist, eingeschränkt bzw. verhindert. Das Isoliermaterial ist vorteilhafterweise als eine Dämmschicht aus Polyurethan oder (Bläh-) Beton gestaltet. Für einen besonders guten Wärmeübergang ist es günstig, den Medienleiter mit einem insbesondere mineralischen Mörtel einzuputzen und/oder mittels Spritzbeton zu bekleiden.

In einer weiteren vorteilhaften Ausführungsform wird an dem Medienleiter teilweise eine Schicht aus einem Wärme leitenden Material angeordnet. Das Wärme leitende Material wird bevorzugt an Flächen angeordnet, die in Kontakt mit einer Begrenzungsfläche des Hohlraums stehen. Die Schicht aus Wärme leitenden Material wird vorteilhaft verwendet, um einen Raum auszufüllen, der zwischen dem Medienleiter und den Begrenzungsflächen gebildet sein kann. Dadurch wird gewährleistet, dass sich Medienleiter und Begrenzungsfläche zumindest mittels der Schicht aus Wärme leitendem Material Wärme leitend berühren.

Vorteilhaft wird das Fluid durch das Rohr gepumpt. Mittels einer steuerbaren Pumpe kann eine vorbestimmte Strömungsgeschwindigkeit des Fluids eingestellt werden, sodass die Übertragungsleistung an Wärmeenergie gesteuert werden kann. Die vorbestimmte Strömungsgeschwindigkeit liegt insbesondere im Bereich von zirka 1 bis 5 m/s.

In einer bevorzugten Ausführungsform der Erfindung wird das Fluid mindestens einem Wärmespeicher zugeführt. Die Anzahl an Durchfahrten von Fahrzeugen durch Hohlräume wie einem Bahntunnel oder Straßentunnel variiert nach Tageszeit. Morgens und abends ist die Anzahl an Durchfahrten aufgrund von Berufsverkehr höher als zu anderen Tageszeiten. Auch ist zu nächtlicher Stunde das Verkehrsaufkommen in der Regel geringer als am Tage. Daher wird den Begrenzungsflächen des Hohlraums tagsüber mehr Wärmeenergie zugeführt als Nachts, sodass auch die Wärmeabführung mittels des durch den Medienleiter fließenden Fluids variiert. Durch die Zuführung des Fluids zu mindestens einem Wärmespeicher kann dem Verbraucher weitgehend unabhängig von der Wärmeabführung Energie zugeführt werden. Darüber hinaus wirkt das den Hohlraum umgebende Material selbst als ein Puffer bzw. Wärmeenergiespeicher, der ausgeglichen abführbare Wärme bereithält.

Das Fluid ist vorteilhafterweise Wasser. Wasser ist ein guter Wärmeträger und gleichzeitig in der Lage, Wärmeenergie lange zu speichern. Zudem ist es in großer Menge vorhanden und preisgünstig. Dem Wasser wird vorteilhaft ein Frostschutzmittel zugesetzt. Dadurch ist es möglich eine Wärmepumpe mit einer Rücklauftemperatur von kleiner als 0°C zum Abführen der Wärmeenergie aus dem den Hohlraum umgebenen Material und/oder dem den Hohlraum ausfüllenden Fluid einzusetzen.

Bevorzugt wird mindestens eine Zu- und/oder Ableitung mit dem Rohr verbunden. Durch die Zuleitung wird Fluid zu dem Mediumleiter zugeleitet, während dem Mediumleiter durch die Ableitung Fluid entnommen wird. Die Zu- und/oder Ableitung kann aus den gleichen Materialien bestehen wie der Mediumleiter. Bevorzugt ist das Fluid, das dem Mediumleiter zugeleitet wird, Wasser mit einer Temperatur von 1 °C bis 10 °C, bevorzugt 5 °C.

Vorteilhaft wird die Zu- und/oder Ableitung mit einem Isoliermaterial ausgekleidet oder ummantelt. Die Isolierung ist insbesondere bei der Ableitung vorteilhaft und dient dazu, das Fluid, das durch die Ableitung strömt, von der Umgebung zu isolieren.

### Kurzbeschreibung der Zeichnungen

Nachfolgend wird ein Ausführungsbeispiel einer erfindungsgemäßen Vorrichtung und des zugehörigen Verfahrens anhand der beigefügten schematischen Zeichnungen näher erläutert. Es zeigt:
- Fig. 1: eine stark vereinfachte Darstellung einer Vorrichtung zur Durchführung des erfindungsgemäßen Verfahrens, und
- Fig. 2: einen Teilquerschnitt einer Vorrichtung zur Durchführung des erfindungsgemäßen Verfahrens.

### Detaillierte Beschreibung des Ausführungsbeispiels

Die Vorrichtung weist einen Hohlraum in Form eines U-Bahntunnels 1 eines nicht weiter dargestellten U-Bahnnetzes auf. Der U-Bahntunnel 1 umfasst als Begrenzungsflächen eine Decke 3 sowie Seitenwände 4 und einen Boden 5 mit einem Gleisbett 6, das Schwellen 6a und Gleise 6b umfasst.

Die Decke 3 ist teilweise mit einem Wärme leitenden Material 7 bedeckt, in das formschlüssig ein Kunststoffrohr 9 als Mediumleiter derart eingepasst ist, dass es sich entlang der Länge der Decke erstreckt. Das Kunststoffrohr 9 weist an Flächen, die nicht von dem Wärme leitendem Material 7 umgeben sind, eine Schicht aus Isoliermaterial 11 auf. Durch die derartige Gestalt des Kunststoffrohrs 9 wird ein gezielter Entzug von Wärmeenergie aus der Decke 3 ins Innere des Kunststoffrohrs 9 hinein erreicht, während ein Wärmeaustausch mit der sich im U-Bahntunnel 1 befindlichen Luft weitgehend vermieden wird.

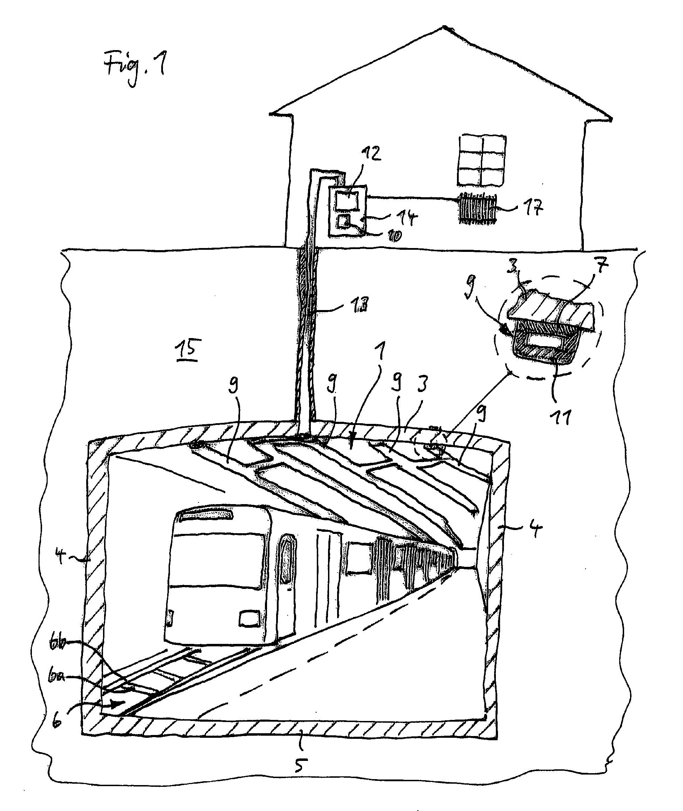

Eine Ableitung 13, die mit einem Isoliermaterial ausgekleidet ist, ist mit dem Kunststoffrohr 9 verbunden. Die Längsrichtung der Ableitung 13 ist vertikal zu der Längsrichtung des Kunststoffrohres 9 ausgerichtet. Die Ableitung 13 verläuft durch die Decke 3 sowie durch ein den Hohlraum umgebendes Erdreich 15, das insbesondere bezogen auf Fig. 1 über der Decke 3 des U-Bahntunnels 1 liegt. Die Ableitung 13 führt zu einer Heizanlage 14 eines Abnehmers 17.

Durch das Kunststoffrohr 9 wird mittels einer Pumpenanlage 10 Wasser gepumpt. Das Wasser hat zunächst eine geringere Temperatur als das den Hohlraum umgebende Erdreich 15 und nimmt daher Wärmeenergie, die in der Decke 3 gespeichert ist, im Vorbeifließen auf. Durch die Isoliermaterialschicht 11 ist das Wasser gegen einen möglichen Wärmeverlust in die im U-Bahntunnel 1 befindliche Luft geschützt.

Der Abnehmer 17 erhält das in dem Kunststoffrohr 9 aufgewärmte Wasser durch die Ableitung 13 in seiner Heizanlage 14, wo es mittels eines Wärmepumpensystems 12 hinbefördert wird. Der Abstand des Abnehmers 17 zu der als Wärmequelle wirkenden Decke 3 ist in einer Stadt mit einem ausgebauten U-Bahnnetz gering.

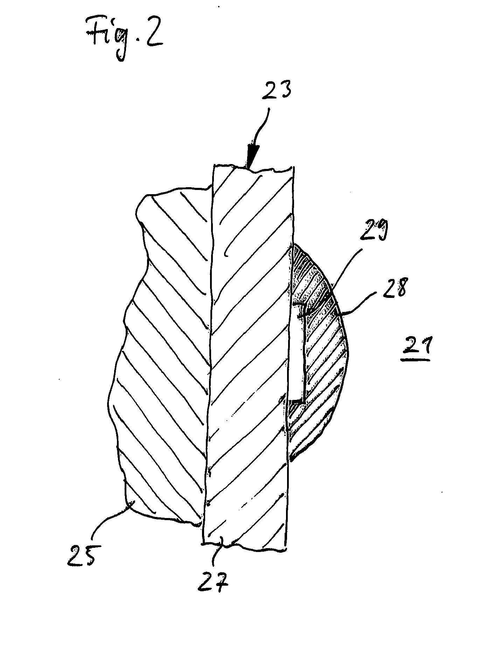

Fig. 2 zeigt teilweise einen Querschnitt der Vorrichtung gemäß Fig. 1. In dieser Fig. 2 ist die Luft im Inneren des U-Bahntunnels mit Bezugzeichen 21 bezeichnet. In Fig. 2 ist ferner eine Seitenwand 23 als Begrenzungsfläche des Hohlraums gezeigt. Die Seitenwand 23 umfasst Umgebungsgestein bzw. Erdreich 25, durch das der U-Bahntunnel 21 gegraben wurde, und eine Tunnelwand 27, die das Erdreich 25 bedeckt. Die Tunnelwand 27 besteht bevorzugt aus Stahlbeton. Sie speichert Wärmeenergie, welche von durch den U-Bahntunnel fahrenden U-Bahnen abgegeben wurde und weist dadurch eine Temperatur von zwischen zirka 15 und 20 °C auf.

An der Tunnelwand 27 ist ein als Flachrohr 29 gestalteter Medienleiter angeordnet, der von Wasser durchströmt wird und aus einem Material hergestellt ist, das ein guter Wärmeleiter ist.

Das Flachrohr 29 ist derart ausgebildet, dass es eine große Kontaktfläche zu der Seitenwand 23 aufweist. Das Flachrohr 29 erstreckt sich entlang der Länge der Seitenwand 23 und weist eine große Breite auf, während die Höhe des Flachrohres 29 gering ist. Beispielsweise weist das Flachrohr 29 eine Breite von 30 cm und eine Höhe von 4 cm auf. Die Länge des Flachrohres 29 ist an die Länge des U-Bahntunnels 21 angepasst.

Das Flachrohr 29 weist eine im Wesentlichen rechteckige Querschnittsform auf und ist mit seiner einen breiten Seitenfläche an der Seitenwand 23 angeordnet. Die zweite breite Seitenfläche sowie die Schmalseiten des Flachrohres 29 sind von einer Dämmschicht 28 aus Polyurethan umgeben. Alternativ kann die Dämmschicht auch Beton gestaltet sein. Die Dämmschicht 28 schützt das Flachrohr 29 vor mechanischen Beschädigungen und Witterungseinflüssen, die von dem U-Bahntunnel 21 herrühren und isoliert es gegen Kälte. Aufgrund der derartigen Gestaltung des Flachrohrs ist die Wärmeabsorptionsfläche des Flachrohres 29 zu der Seitenwand 23 groß, während die nicht zur Wärmeabsorption dienenden Flächen des Flachrohres 29 isoliert sind.

Das Flachrohr 29 wird von Wasser durchströmt, das bei Eintritt in den Bereich des U-Bahntunnels 21 eine Temperatur von etwa 5 °C aufweist. Das Flachrohr 29 ist aus einem Material hergestellt, das leicht Wärme leiten kann, beispielsweise aus Polyethylen. Dadurch wird ein Wärmeübergang von der Seitenwand 23 zu dem durch das Fachrohr 29 fließenden Wasser gezielt angeregt, sodass sich das durch das Flachrohr 29 strömende Wasser beim Entlangströmen an der Tunnelwand 27 erwärmt. Das erwärmte Wasser wird zu einem nicht dargestellten Wärmespeicher gepumpt, um anschließend bei Bedarf dem Abnehmer 17 zugeführt zu werden.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 1: U-Bahntunnel
- 3: Decke
- 4: Seitenwand
- 5: Boden
- 6: Gleisbett
- 6a: Schwellen
- 6b: Gleis
- 7: Wärme leitendes Material
- 9: Kunststoffrohr
- 10: Pumpenanlage
- 11: Isoliermaterialschicht
- 12: Wärmepumpensystem
- 13: Ableitung
- 14: Heizanlage
- 15: Erdreich
- 17: Abnehmer
- 21: Luft im U-Bahntunnel
- 23: Seitenwand
- 25: Erdreich
- 27: Tunnelwand
- 29: Flachrohr
- 28: Dämmschicht

## Patentansprüche

1. Verfahren zur Nutzung thermischer Energie, bei dem in einem für andere Zwecke als der geothermischen Energiegewinnung genutzten Hohlraum (1, 21) im Erdreich mindestens ein rohrförmiger Medienleiter (9, 29) angeordnet wird, und ein Fluid durch den Medienleiter (9, 29) geleitet wird, das angepasst ist, Wärmeenergie aus dem den Hohlraum (1, 21) umgebenden Erdreich (15, 25) und/oder einem den Hohlraum (1, 21) ausfüllenden Fluid aufzunehmen.

2. Verfahren gemäß Anspruch 1, **dadurch gekennzeichnet, dass** als Hohlraum (1, 21) ein Bahntunnel genutzt wird.

3. Verfahren gemäß Anspruch 1 oder Anspruch 2, **dadurch gekennzeichnet, dass** der rohrförmige Medienleiter (9, 29) an den Begrenzungsflächen (3, 5, 25) des Hohlraums angeordnet wird.

4. Verfahren gemäß einem der vorstehenden Ansprüche 1 bis 3, **dadurch gekennzeichnet, dass** der rohrförmige Medienleiter (9, 29) ein Flachrohr (29) ist.

5. Verfahren gemäß einem der vorstehenden Ansprüche 1 bis 4, **dadurch gekennzeichnet, dass** der rohrförmige Medienleiter (9, 29) aus Kunststoff, bevorzugt thermoplastischen Kunststoff, noch bevorzugter Polyethylen, hergestellt ist.

6. Verfahren gemäß einem der vorstehenden Ansprüche 1 bis 5, **dadurch gekennzeichnet, dass** an dem rohrförmigen Medienleiter (9, 29) abschnittsweise eine Schicht aus einem Isoliermaterial (11) ausgebildet wird.

7. Vorrichtung zur Nutzung thermischer Energie, die einen für andere Zwecke als der geothermischen Energiegewinnung genutzten Hohlraum (1, 21) im Erdreich (15, 25) und ein Mittel (9, 29) zum Leiten eines Fluids umfasst, das angepasst ist, Wärmeenergie von dem den Hohlraum (1, 21) umgebenden Erdreich (15, 25) und/oder einem den Hohlraum (1, 21) ausfüllenden Fluid aufzunehmen.

8. Vorrichtung gemäß Anspruch 7, **dadurch gekennzeichnet, dass** der Hohlraum (1, 21) ein Bahntunnel ist.

9. Vorrichtung gemäß Anspruch 7 oder 8, **dadurch gekennzeichnet, dass** das Mittel (9, 29) zum Leiten des Fluids ein rohrförmiger Medienleiter ist.

10. Vorrichtung gemäß einem der Ansprüche 7 bis 9, **dadurch gekennzeichnet, dass** das Mittel (9, 29) zum Leiten des Fluids ein Flachrohr ist.
